Europäisches Patentamt

European Patent Office

Office européen des brevets

(19)

(11) Numéro de publication: **0 424 289 A1**

## (12) DEMANDE DE BREVET EUROPEEN

(21) Numéro de dépôt: **90420446.8**

(22) Date de dépôt: **16.10.90**

(51) Int. Cl.⁵: **B62D 33/00**, B60P 1/00

(30) Priorité: **17.10.89 FR 8913876**

(43) Date de publication de la demande:
**24.04.91 Bulletin 91/17**

(84) Etats contractants désignés:
**AT BE CH DE DK ES FR GB GR IT LI LU NL SE**

(71) Demandeur: **SOPEGE**
**Rovagny**
**F-74290 Talloires(FR)**

(72) Inventeur: **Gueunier, Patrick**
**Rovagny**
**F-74290 Talloires(FR)**

(74) Mandataire: **Maureau, Philippe et al**
**Cabinet Germain & Maureau Le Britannia -**
**Tour C 20, bld Eugène Déruelle Boîte**
**Postale 3011**
**F-69392 Lyon Cédex 03(FR)**

(54) **Véhicule utilitaire du type à plateau ou à benne.**

(57) Ce véhicule comprend une cabine (4) indépendance de la cabine de pilotage (3), et située sur l'arrière de celle-ci, entre sa paroi arrière et l'extrémité de la benne ou du plateau (2).

FIG_1

## VEHICULE UTILITAIRE DU TYPE A PLATEAU OU A BENNE

La présente invention concerne un véhicule utilitaire du type à plateau ou à benne.

Il est tout-à-fait intéressant, pour les personnes exerçant des professions utilisant de tels véhicules au cours de leurs déplacements, de pouvoir disposer d'un volume de rangement et de stockage pour les différents outils, matériels, vêtements, produits, matériaux, etc, utilisés dans l'exercice de leur profession. Par exemple, un pépiniériste devra emporter, en plus des arbres ou de la terre placés dans la benne, toutes sortes d'outils peur le travail de la terre, des engrais ou produits similaires, des vêtements de protection contre la pluie, etc.

Il est connu de fixer, par boulonnage au châssis du véhicule, une caisse située immédiatement derrière la cabine de pilotage, contre sa paroi arrière et à l'extérieur de celle-ci. Ce moyen plutôt rudimentaire et inesthétique de réaliser un volume de rangement présente l'inconvénient de ne pas permettre un rangement et un stockage des différents matériels ou produits à l'abri des intempéries ou des vols. De plus, la place disponible entre la cabine et la benne ou le plateau est faible.

Pour remédier a ces inconvénients, des véhicules comprennent une cabine supplémentaire, située en arrière de la cabine de pilotage à laquelle elle est attenante et avec laquelle elle communique largement, qui comprend une porte latérale s'ouvrant vers l'extérieur et qui peut soit recevoir un siège arrière, soit être utilisée à titre de volume de rangement. Parmi ces véhicules, le "Turbodaily" 35-10 d'IVECO dans sa version "plateau ridelle" et le C 25 de CITROEN dans la même version peuvent être cités.

Ce genre de cabine de rangement présente les inconvénients de n'être pas isolée de la cabine de pilotage du véhicule, de sorte que des odeurs provenant de produits stockés peuvent se répandre dans celle-ci, ou de l'humidité provenant de vêtements humides, ou diverses salissures causées par les outils transportés. De plus, les volumes de rangement ainsi créés restent limités en place disponible, pas toujours faciles d'accès, et ne permettant pas un rangement pratique à l'usage, ces cabines n'étant pas spécifiquement conçues à cette fin. Dans les modèles actuellement connus, leur largeur n'excède pas soixante centimètres.

La présente invention vise à remédier à ces différents inconvé nients en fournissant un véhicule utilitaire du type à plateau ou à benne qui permette le rangement pratique des différents matériels ou produits à l'abri des vols ou des intemperies, et sans risque de salissures ou d'odeurs dans la cabine de pilotage.

A cette fin, ce véhicule comprend une cabine indépendante de la cabine de pilotage, située sur l'arrière de celle-ci entre sa paroi arrière et l'extrémité de la benne ou du plateau.

La cabine de pilotage est ainsi parfaitement isolée de la cabine de rangement, et ne reçoît ni odeurs, ni humidité, ni salissures en provenance de celle-ci. Par "cabine", il faut entendre un volume fermé dans lequel une personne peut entrer entièrement, par opposition a une simple "caisse".

La cabine constitue un large volume de rangement pour toutes sortes d'outils, même de l'outillage lourd, et peut servir d'abri pour se reposer, changer de vêtements ou pour travailler. Dans ce dernier cas, la cabine peut être équipée d'un établi avec étau, d'un groupe électrogène, ou autre.

Pour fixer les idées, cette cabine a un volume de plus ou moins cinq mètres cubes suivant les types de véhicules sur lesquels elle est adaptée.

De préférence, cette cabine est destinée à équiper un véhicule du type "à châssis long", sur les longerons duquel elle est boulonnée, un matériau élastique d'amortissement des vibrations étant interposé entre les longerons et la cabine.

Ce type de véhicule comprend un espace, en général inutilisé, entre la paroi arrière de la cabine de pilotage et la paroi avant de la benne ou du plateau, dont la longueur peut atteindre, suivant les modèles de véhicules, 1,10 mètre, et qui permet selon l'invention de loger une cabine ayant jusqu'à 1,10 mètre de largeur, les seuls aménagements à réaliser sur le véhicule, outre ceux qui concernent la fixation de la cabine sur le châssis, consistant à reculer le réservoir de carburant.

Selon une forme de réalisation préférée de l'invention, la cabine se prolonge, au niveau de sa partie supérieure et vers l'avant du véhicule, par une avancée qui recouvre au moins partiellement le toit de la cabine de pilotage.

Des volumes de rangement complémentaires, par exemple sous forme de tiroirs, sont ainsi réalisés. Avantageusement, la paroi de cette avancée qui est tournée vers l'avant est inclinée de manière à être dans le prolongement du pare-brise du véhicule, pour des raisons d'esthétique et d'aérodynamisme.

Selon une forme perfectionnée de réalisation, la cabine est munie, du côté droit du véhicule, d'une fenêtre sur sa paroi avant, située en vis-à-vis d'une autre fenêtre elle-même située sur sa paroi arrière. La vision vers l'arrière en est améliorée, et "l'angle mort" est supprimé.

Des fenêtres basses et hautes de ventilation peuvent être prévues.

De toute façon, l'invention sera bien comprise à l'aide de la description qui suit, en référence au dessin schématique annexe représentant, à titre d'exemple non limitatif, une forme de réalisation préférée du véhicule selon l'invention.

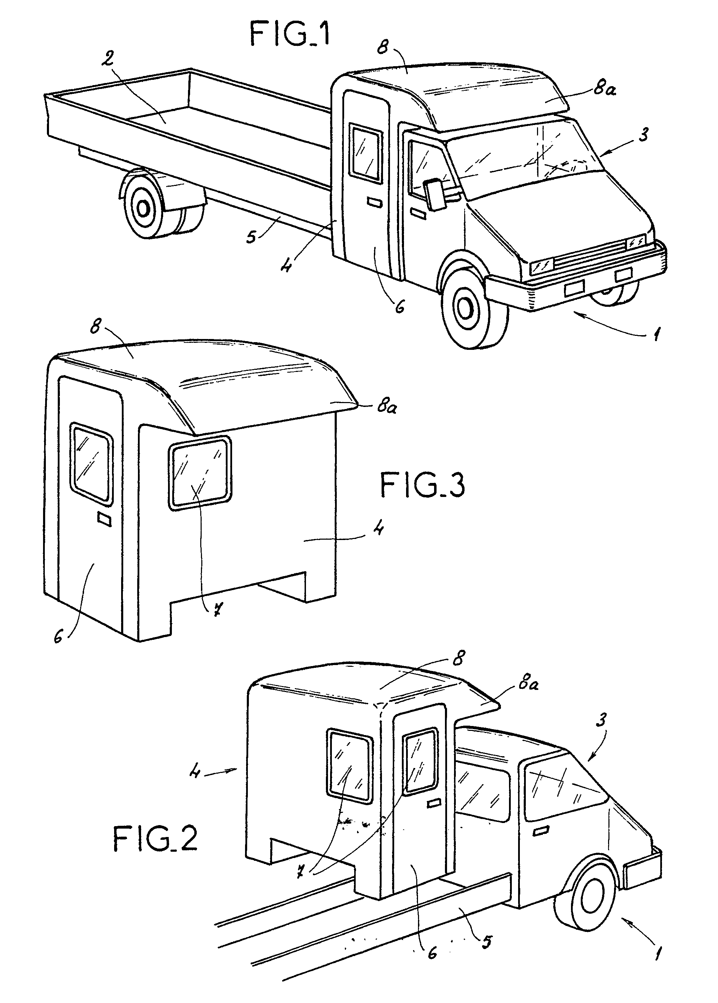

Figure 1 en est une vue en perspective ;

Figure 2 en est une vue en perspective éclatée, sous un autre angle ; et

Figure 3 est une vue en perspective d'un sous-ensemble du véhicule.

Les figures représentent un véhicule utilitaire 1 comprenant un plateau 2 et une cabine de pilotage 3. Le véhicule 1, qui est du type "à châssis long", est équipé d'une cabine de rangement 4, indépendante de la cabine 3 et située sur l'arrière de celle-ci, la cabine 4 étant logée dans l'espace existant entre la paroi arrière de la cabine 3 et l'extrémité avant du plateau 2. La cabine 4 est boulonnée sur les longerons 5 du châssis, un matériau élastique d'amortissement des vibrations (non représenté) étant interposé entre les longerons 5 et la cabine 4.

La cabine 4 a une largeur de 1,10 mètre et comprend, du côté droit pour des raisons de sécurité, une large porte latérale 6 ainsi que deux fenêtres 7 en vis-à-vis, situées sur chacune des parois avant et arrière de la cabine 3, sur le côté droit du véhicule 1. La porte 6 est équipée d'une poignée de fermeture ainsi que d'une serrure. En outre, la cabine 4 se prolonge, au niveau de sa partie supérieure et vers l'avant du véhicule 1, par une avancée 8 qui recouvre le toit de la cabine 3, et dont la paroi 8a qui est tournée vers l'avant, est inclinée dans le prolongement du pare-brise du véhicule 1.

## Revendications

**1** - Véhicule utilitaire du type à plateau ou à benne, caractérisé en ce qu'il comprend une cabine (4) indépendante de la cabine de pilotage (3), et située sur l'arrière de celle-ci, entre sa paroi arrière et l'extrémité de la benne ou du plateau (2).

**2** - Véhicule utilitaire selon la revendication 1, caractérisé en ce que la cabine (4) est destinée à équiper un véhicule (1) du type "à châssis long", sur les longerons (5) duquel elle est boulonnée, un matériau élastique d'amortissement des vibrations étant interposé entre les longerons (5) et la cabine (4).

**3** - Véhicule utilitaire selon la revendication 1 ou 2, caractérisé en ce que la cabine (4) comprend une large porte latérale (6).

**4** - Véhicule utilitaire selon l'une des revendications 1 à 3, caractérisé en ce que la cabine (4) se prolonge, au niveau de sa partie supérieure et vers l'avant du véhicule (1), par une avancée (8) qui recouvre au moins partiellement le toit de la cabine de pilotage (3).

**5** - Véhicule utilitaire selon la revendication 4, caractérise en ce que la paroi de cette avancée (8) qui est tournée vers l'avant est inclinée de manière à être dans le prolongement du pare-brise du véhicule (1).

**6** - Véhicule utilitaire selon l'une des revendications 1 à 5, caractérisé en ce que la cabine (4) est munie, du côté droit du véhicule (1), d'une fenêtre (7) sur sa paroi avant, située en vis-à-vis d'une autre fenêtre (7) elle-même située sur sa paroi arrière.

**7** - Véhicule utilitaire selon l'une des revendications 1 à 6, caractérisé en ce que la cabine (4) est munie de fenêtres basses et hautes de ventilation.

FIG_1

FIG_2

FIG_3

4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,A | FR-A-2 082 135 (M. CASSIN)<br>* page 2, ligne 4 - page 3, ligne 7; figures 1, 2 *<br>— — — | 1,2 | B 62 D<br>33/00<br>B 60 P 1/00 |
| X,A | US-A-4 249 295 (B. W. LANCE)<br>* colonne 1, ligne 66 - colonne 4, ligne 2; figures 1-3, 5 *<br>— — — | 1,2 | |
| X,A | GB-A-2 148 206 (WELFORD TRUCK BODIES LIMITED)<br>* page 1, ligne 43 - page 1, ligne 49; figures 1, 2 *<br>— — — | 1,2 | |
| A | FR-A-2 445 259 (SOCIETE ANONYME DES USINES CHAUSSON)<br>* page 5, ligne 23 - page 6, ligne 16; figure 3 *<br>— — — — — | 1,7 | |
| | | | **DOMAINES TECHNIQUES RECHERCHES (Int. Cl.5)**<br><br>B 62 D<br>B 60 P<br>B 60 R |

Le présent rapport de recherche a été établi pour toutes les revendications

| Lieu de la recherche | Date d'achèvement de la recherche | Examinateur |
|---|---|---|
| La Haye | 14 janvier 91 | CHLOSTA P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant